# EUROPEAN PATENT APPLICATION

(11) **EP 3 424 372 A1**
(43) Date of publication of application: **09.01.2019**
(21) Application number: 17020280.8
(22) Date of filing: 03.07.2017
(51) Int. Cl.: A47J 17/14

(54) **ORBITAL MOTION PEELER**

(71) Applicant: McNair-Chaplin, Christopher Robert, Truro Cornwall TR1 1UP (GB)
(72) Inventor: McNair-Chaplin, Christopher Robert, Truro Cornwall TR1 1UP (GB)
(74) Representative: Craske, Stephen Allan

(57) **Abstract**

The orbital motion peeler which includes a casing 101 adapted to be held in the hand which contains a motor 102 and a power source 152. A blade holder 117 has a front end projecting from the casing and carries a blade 118. The blade holder is constrained by a fulcrum pin 114 located in a slot 120 with a retaining cap 112. An eccentric drive hub 110 driven by the motor 102 is engaged in a bearing 110 carried by the blade holder 117 such that the blade 118 moves in an orbital motion relative to the casing.

## Description

### TECHNICAL FIELD OF THE INVENTION

This invention relates to a device for peeling an item such as a fruit or vegetable using orbital motion.

### BACKGROUND

Advancements in kitchen appliances and kitchen aids have progressed swiftly in recent years. Nevertheless, peeling fruits and vegetables has still remained an area of considerable tedium, frustration and injury. Motorized peelers have been introduced as a way to ease peeling by rapidly moving the blade from side to side or rotating the blade. However these solutions do not result in easy peeling, but may actually increase the difficulty of peeling or risk of injury.

Automated peelers have also been introduced that allow a fruit or vegetable to be peeled automatically by placing the fruit or vegetable in a constraint, while a peeling blade moves over the surface. However, as any food preparer would know, the peeling is inconsistent and may waste a larger portion of the fruit or vegetable than necessary. The accuracy is lost without the guiding force of a human hand.

Therefore, there is a need in the art for an apparatus for peeling that does not result in waste and injury, and peels efficiently and accurately.

### SUMMARY OF THE INVENTION

When viewed from one aspect the present invention proposes an orbital motion peeler which includes:
- a casing adapted to be held in the hand;
- a motor secured to the casing;
- an eccentric drive member arranged to be driven by the motor;
- a blade holder having a front end projecting from the casing; and
- a blade carried by said front end of the blade holder;
wherein the blade holder is driven by the eccentric drive member such that the blade moves in an orbital motion relative to the casing.

In an embodiment an orbital motion peeler has a blade holder provided with means for constraining movement thereof relative to a casing.

In an embodiment an orbital motion peeler has a blade holder provided with means for constraining movement thereof relative to a casing and said means is located between a blade and an eccentric drive member.

In an embodiment an orbital motion peeler has a blade holder provided with a fulcrum pin which is located in a slot in the blade holder.

In an embodiment an orbital motion peeler has a blade holder provided with a fulcrum pin which carries a retaining cap which holds the blade holder on the fulcrum pin.

In an embodiment an orbital motion peeler has a motor with a rotatable shaft which is fixed to an eccentric drive member.

In an embodiment an orbital motion peeler has an eccentric drive member engaged in a bearing carried by a blade holder.

In an embodiment an orbital motion peeler has a blade holder which carries a C-shaped blade enclosure in which the blade is mounted.

In an embodiment an orbital motion peeler has a blade which includes at least two substantially parallel blade elements.

In an embodiment an orbital motion peeler has a blade which includes at least two substantially parallel blade elements and opposing edges of the two substantially parallel blade elements are sharpened.

In an embodiment an orbital motion peeler has a blade which is mounted for pivotal movement about an axis which extends substantially parallel to its length.

In an embodiment an orbital motion peeler contains a motor and a power source for the motor.

### BRIEF DESCRIPTION OF THE DRAWINGS

The following description and the accompanying drawings referred to therein are included by way of non-limiting example in order to illustrate how the invention may be put into practice. In the drawings:
Figure 1 is a sectional side view of one embodiment of an orbital motion peeler;
Figure 2 is a top view of a blade holder of the orbital motion peeler; and
Figure 3 is a diagram showing the working path of the orbital motion peeler.

### DETAILED DESCRIPTION OF THE DRAWINGS

Embodiments of the present invention generally relate to an orbital motion peeler. In particular embodiments, the orbital motion peeler is a motorized hand-held peeler that contains a blade, the center of which moves in an orbital path thus improving the efficiency of the shear action of the blade, enabling easy and quick peeling of fruits and vegetables.

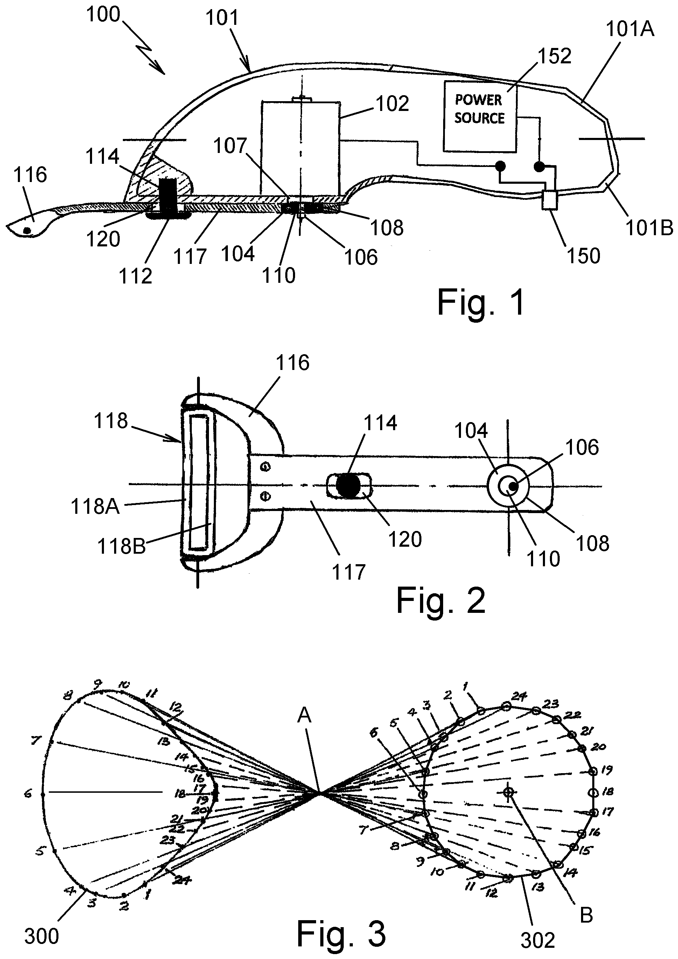

**Fig. 1** is a side view of an orbital motion peeler 100 in accordance with one embodiment of the present invention. In this embodiment, the peeler 100 comprises a generally elongate casing 101 which is shaped to be held in one hand. The casing includes an upper casing part 101A and a lower casing part 101B. The lower casing part 101B is coupled to a blade holder 117 by a retaining cap 112 and fulcrum pin 114. The retaining cap 112 is secured to a bottom end of the fulcrum pin 114 and an upper end portion of the fulcrum pin 114 is fixed to the lower casing part 101B. The blade holder 117 is held captive between the casing 101 and the retaining cap 112. In this embodiment the lower casing part 101B and the blade holder 117 sit flush against each other. In other embodiments, one or more spaces and/or low friction spacers may separate the casing 101 and the blade holder 117 to reduce friction between these components.

The casing 101 contains a motor 102 with a motor shaft 106. The motor 102 may be mounted inside the casing 101 as in this embodiment but in other embodiments the motor may be mounted on an underside of the casing. The motor shaft 106 passes through an opening 107 in the lower casing part 101B and an aperture 108 in a portion of the blade holder 117. A switch 150 that enables/disables a connection between a power source 152 and the motor 102 is located, in one embodiment, on the lower casing part 101B. In other embodiments, the switch 150 can be located at a front end of the upper casing part 101A.

A front portion of the blade holder 117 projects beyond the casing 101 and carries a blade enclosure 116 with a blade 118 (e.g., a peeling blade) shown in **Fig. 2****.** In one embodiment, as shown, the blade enclosure 116 is generally C-shaped with the peeling blade 118 extending between the free ends of the blade enclosure 116. The blade 118 may have spaced twin blade elements 118A and 118B, as shown, with opposing edges of the two blade elements being sharpened.

The fulcrum pin 114 is located between the blade enclosure 116 and the motor shaft 106. The aperture 108 in a rear portion of the blade holder contains a bearing 104, e.g. a roller bearing or low friction bush. The bearing 104 may be a friction fit within the aperture 108 and encloses a centered drive hub 110 such that the bearing 104 allows friction-free rotation of the drive hub. The drive hub 110 is secured to the motor shaft 106 which is offset from the center of the drive hub. When the motor 102 is coupled to the power source 152 via switch 150, the motor shaft 106 rotates while the upper casing 101 remains stationary. The drive hub 110 rotates in an eccentric manner, creating an orbital path for the rear portion of the blade holder 117. In other embodiments, instead of an offset or eccentric motor-driven drive hub of the type described above, the peeler 100 can use different types of actuators which move the blade holder 117 in a similar orbital path.

As the rear portion of the blade holder 117 moves along its orbital path the blade holder 117 rotates about the fulcrum pin 114 which is fixed relative to the casing 101. The fulcrum pin 114 passes through a slot 120 in the blade holder 117, allowing the blade holder to slide in a front-to-rear direction. The front portion of the blade holder 117 with the blade enclosure 116 therefore rotates in an orbital path which may be similar to, greater or smaller than the orbital path taken by the eccentric drive hub 110. In some embodiments, with at least two edges of the blade 118 sharpened for peeling/cutting, a smooth back and forth orbital motion provides an effortless and rapid peeling action. As the motor shaft 106 rotates, the blade holder 117 moves along the plane of the slot 120, while also moving from side to side due to the orbital motion of the eccentric drive hub 110, causing the blade 118 to move about an opposing orbital path.

In some embodiments, the blade 118 is partially free to pivot on an axis extending substantially parallel to its length within the blade enclosure 116. When the blade 118 makes contact with the surface of an item to be peeled, the motion path of the blade holder 117, along with the ability of the blade to rotate to contour to the surface of the item, causes the item to be in close contact at all times with blade 118 resulting in an easy and efficient peeling experience.

In some embodiments, the power source 152 may comprise one or more batteries (e.g. 4 x AA batteries) which may be of the rechargeable kind. The orbital motion peeler could also be driven by electrical mains power, with or without an AC adapter. The power source is directly coupled to the motor 102 and controlled via the switch 150. Those of ordinary skill in the art will recognize that the switch 150 can be placed anywhere on the body of peeler 100 that is convenient for use. Further, the location of the power source 152 is not fixed in any particular place.

**Fig. 3** illustrates the path of the blade 118 in the described embodiment. As the blade holder 117 is moved about the axis A of fulcrum pin 114 in the peeler 100 of **Fig. 1****,** the center of blade 118 moves along the path 300. The eccentric drive hub 110 in the rear portion of the blade holder 117 moves along the path 302 around the axis B of the motor drive shaft 106, in an opposing motion to the forward portion of the blade holder 117 carrying the blade 118. The points one through twenty four in path 300 is illustrative of discrete positions of the blade 118 through 360 degrees of orbital motion. Similarly the points one through twenty four in path 302 represent discrete positions of the drive hub 110 in an anti-clockwise movement.

The orbital motion is the result of the blade 118 moving in two ways:
1) the slot 120 allows the blade holder 117 to move in a linear motion back and forth, and
2) the motion actuation of the motor shaft 106 (whether using an eccentric drive hub or some other actuation mechanism).
This orbital cutting motion responds very positively to the contoured shape of fruits and vegetables because the blade moves in a path that effectively attempts to cover different areas of the raised/lowered surfaces of the fruits and vegetables dependent on their depth.

In the embodiment of the orbital motion peeler described herein it will be appreciated that there are several additional hardware coupling pieces such as a plurality of screws securing portions of the casing 101 together. Those of ordinary skill in the art will recognize that while screws are used in this embodiment, other hardware or adhesive may be used to secure the casing together in other embodiments.

All examples described herein are presented in a non-limiting manner. Various modifications and changes may be made as would be obvious to a person skilled in the art having benefit of this disclosure. Realizations in accordance with embodiments have been described in the context of particular embodiments. These embodiments are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisaged and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

Whilst the above description places emphasis on the areas which are believed to be new and addresses specific problems which have been identified, it is intended that the features disclosed herein may be used in any combination which is capable of providing a new and useful advance in the art.

### List of references

- 100: orbital motion peeler
- 101: casing
- 101A: upper casing part
- 101B: lower casing part
- 102: motor
- 104: drive hub bearing
- 106: motor shaft
- 107: opening for motor shaft
- 108: aperture for drive hub bearing
- 110: eccentric drive hub
- 112: retaining cap
- 114: fulcrum pin
- 116: blade enclosure
- 117: blade holder
- 118: blade
- 118A: first blade part
- 118B: second blade part
- 120: slot for fulcrum pin
- 150: switch
- 152: power source
- 300: path of blade
- 302: path of eccentric drive hub

## Claims

1. An orbital motion peeler which includes:
- a casing (101) adapted to be held in the hand;
- a motor (102) secured to the casing;
- an eccentric drive member (110) arranged to be driven by the motor;
- a blade holder (117) having a front end projecting from the casing; and
- a blade (118) carried by said front end of the blade holder;
wherein the blade holder (117) is driven by the eccentric drive member (110) such that the blade (118) moves in an orbital motion relative to the casing.

2. An orbital motion peeler according to Claim 1 in which part of the blade holder is provided with means (112) for constraining movement thereof relative to the casing.

3. An orbital motion peeler according to Claim 2 in which the means (114) for constraining movement of the blade holder is located between the blade (118) and the eccentric drive member (110).

4. An orbital motion peeler according to Claim 2 or 3 in which the means for constraining movement of the blade holder includes a fulcrum pin (114) which is secured to the casing and located in a slot (120) in the blade holder.

5. An orbital motion peeler according to Claim 4 in which the fulcrum pin (114) carries a retaining cap (112) which holds the blade holder on the fulcrum pin.

6. An orbital motion peeler according to any preceding claim in which the motor (102) has a rotatable shaft (106) which is fixed to the eccentric drive member (110).

7. An orbital motion peeler according to any preceding claim in which the eccentric drive member (110) is engaged in a bearing (104) carried by the blade holder.

8. An orbital motion peeler according to any preceding claim in which the blade holder carries a C-shaped blade enclosure (116) in which the blade (118) is mounted.

9. An orbital motion peeler according to any preceding claim in which the blade (118) includes at least two substantially parallel blade elements (118A, 118B).

10. An orbital motion peeler according to Claim 9 in which opposing edges of the two substantially parallel blade elements (118A, 118B) are sharpened.

11. An orbital motion peeler according to any preceding claim in which the blade (118) is mounted for pivotal movement about an axis which extends substantially parallel to its length.

12. An orbital motion peeler according to any preceding claim in which the casing contains a power source (152) for the motor.
